# EUROPEAN PATENT SPECIFICATION

(11) **EP 4 177 482 B1**
(45) Date of publication and mention of the grant of the patent: **06.11.2024**
(21) Application number: 22204897.7
(22) Date of filing: 01.11.2022
(51) Int. Cl.: F16B 2/24, F16B 39/26, F16B 39/34, F16B 41/00

(54) **A SPRING DEVICE FOR SECURING A THREADED FASTENER OF A BOLTED JOINT AND A SYSTEM FOR SECURING A BOLTED JOINT**
FEDERVORRICHTUNG ZUR SICHERUNG EINES BEFESTIGERS MIT GEWINDE EINER SCHRAUBVERBINDUNG UND SYSTEM ZUR SICHERUNG EINER SCHRAUBVERBINDUNG
DISPOSITIF DE RESSORT POUR FIXER UN ÉLÉMENT DE FIXATION FILETÉ D'UN RACCORD BOULONNÉ ET SYSTÈME POUR FIXER UN RACCORD BOULONNÉ

(30) Priority: 03.11.2021 SE 2100164
(43) Date of publication of application: 10.05.2023
(73) Proprietor: SAAB AB, 581 88 Linköping (SE)
(72) Inventor: SUNDBERG, Richard, 197 91 Bro (SE)
(74) Representative: Zacco Sweden AB

(56) References cited:
- WO-A1-2018/060055
- KR-A- 20070 003 195

## Description

### Technical field

The present disclosure relates to a spring device for securing a threaded fastener of a bolted joint and a system for securing a bolted joint.

### Background art

A problem with the solutions of the prior art is that the locking functionality is not conserved after the bolt has been removed. Put differently, anchor nuts or threaded inserts as well as anchor bolt, anchor wedge bolt and/or other types of expansion bolts has a limited number of use cycles with remained functionality.

Document WO 2018/060055 A1 discloses a device for compensating for tolerances.

The object of the invention is to provide a spring device and a system for securing a bolted joint, in which the spring device can be used during a plurality of cycles with remained functionality.

### Summary

It is an object of the present disclosure to mitigate, alleviate or eliminate one or more of the above-identified deficiencies and disadvantages in the prior art and solve at least the above mentioned problem.

According to the invention there is provided a system according to claim 1.

One advantage with the spring device is that it can be used in situations where conventional solutions are inadequate or impractical. One such situation are joints that needs to be loosened often. Today's solutions such as anchor nuts or threaded inserts that used to ensure that the threaded bolt will not unscrew itself has a limited number of loosening cycles before they need to be replaced. Preferably the material of the spring device is chosen such that the spring device is able to be used over at least ten, or at least fifty, or at least one hundred loosening cycles without performance degradation or need for replacement of the spring arrangement.

The spring device is arranged to be used in a fastener arrangement where the friction between the spring element and the fastener arrangement will ensure that the spring element stays in place in the fastener arrangement. In turn, the inner peripheral surface of each spring element extends inwards relative the at least one ring-shaped portion and when the spring device encloses a head of a threaded fastener, the inner peripheral surface of each spring element exerts a friction force against the head of the threaded fastener to keep the head of the threaded fastener from rotating relative the spring device and the fastener arrangement. This ensures that the head of the threaded fastener, and therefor also the threaded fastener itself, is not able to move longitudinally relative the spring arrangement and the threaded fastener will stay in place.

According to some embodiments, the at least one ring-shaped portion comprises a ring-shaped first portion and a ring-shaped second portion which is in alignment with the ring-shaped first portion and wherein the ring-shaped first portion and the ring-shaped second portion have a common centre axis, and wherein each of the spring elements is connected in a first end to the ring-shaped first portion and in an opposite second end to the ring-shaped second portion. This has the effect of improved friction force against the head of the threaded fastener to keep the head of the threaded fastener from rotating relative the spring device and the fastener arrangement.

According to some embodiments, the ring-shaped first portion forms a first end portion of the spring device, and the ring-shaped second portion forms a second end portion of the spring device. The ring-shaped end portions add stability to the spring device. Preferably the ring-shaped first portion and the ring-shaped second portion have generally the same geometry. Thereby, it will not matter which end is introduced first into a predetermined hole. Both ends may form an equally stable engagement structure towards a radial support surface in a hole that receives the spring device.

According to some embodiments, said first portion of the inner peripheral surface of the spring element is a central portion of the spring element in the direction of the centre axis, and said other portions are a respective neighboring portion on each opposite side of the first portion, wherein said other portions extend from the first portion to the ring-shaped first portion and the ring-shaped second portion respectively.

This allows a head of the threaded fastener to press the central portion of the spring element, which engage the first and second end portion to press against the inner peripheral of a fasting arrangement, leading to increased friction keeping the head as well as the whole threaded fastener in portion.

One of the advantages of having spring elements with convex shapes directed towards the central axis is that the spring element can be naturally bent and thereby easily loosened without performance degradation or need for replacing the spring arrangement.

According to some embodiments, the at least one ring-shaped portion comprises a slit extending through said portion.

According to some embodiments, each of the ring-shaped first portion and the ring shaped second portion comprises a slit extending though said portion.

Having a slit enables an easy positioning of the spring element into a fastening arrangement since the outer diameter of the spring element can be decreased by simply squeezing the spring element. When the squeezed spring element is position in a fasting arrangement, the squeezing force is removed and the spring element will expand to normal size, i.e. the slit will open. In some example embodiments, the spring element may comprise more than one slit, wherein the slit are located on the first and/or the second end portion.

According to some embodiments, each spring element is able to deform elastically from an unloaded state in which said first portion of the inner peripheral surface is closer to the centre axis than are the other portions of the inner peripheral surface to a deformed state in which said first portion of the inner peripheral surface is in alignment with said the other portions of the inner peripheral surface. In other words, the spring device is able of deforming elastically, not plastically, to a state in which each spring element is generally rectilinear.

According to some embodiments, the spring device comprises a first material defining a core of each spring element and a layer of a second material applied on said first portion of the inner peripheral surface of the spring element, wherein the first material has a higher spring constant than the second material and the second material has a higher friction coefficient than the first material. The spring device is arranged to enclose a head of a threaded fastener, wherein the friction surface of each spring element exerts a friction force against the head of the threaded fastener. It is therefore advantageously to increase the friction of the surface facing the head of the threading fastener.

In another example embodiment, the outer surface of the first end portion and the second end portion may also be covered with the the second material having a higher friction coefficient than the first material defining the core of the spring element. This will increase the friction between the first and second end portion.

According to some embodiments, an outer radius of the at least one ring-shaped portion defines the maximum outer radius of the spring device.

According to some embodiments, an outer radius of the ring-shaped first portion and an outer radius of the ring-shaped second portion are equal and define the maximum outer radius of the spring device. Thereby, the first and second end portions will form a stable support structure against a surrounding wall of a fastener arrangement, said surrounding wall defining a cylindrical hole.

According to some embodiments, the fastener arrangement comprises a sleeve defining said hole. The fastener arrangement preferably also comprises a structural component that holds the sleeve in place, preventing it from rotating around said centre axis.

According to some embodiments, the at least one ring-shaped portion of the spring device comprises a slit extending through it, and the fastener arrangement comprises a projection at an inlet to said hole, said projection having a distance to the centre axis of the hole which is less than the outer radius of the at least one ring-shaped portion of the spring device when the latter is in a non-compressed state in which the slit is open, and which distance is larger than the outer radius of the at least one ring-shaped portion of the spring device when the latter is in a compressed state in which the slit is closed.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a perspective view of the spring device according to an embodiment of the present disclosure.
Figure 2a shows a perspective side view of the system according to an embodiment of the present disclosure.
Figure 2b shows a perspective cross-sectional view of the system according to an embodiment of the present disclosure.
Figure 2c shows a perspective exploded view of the system according to an embodiment of the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

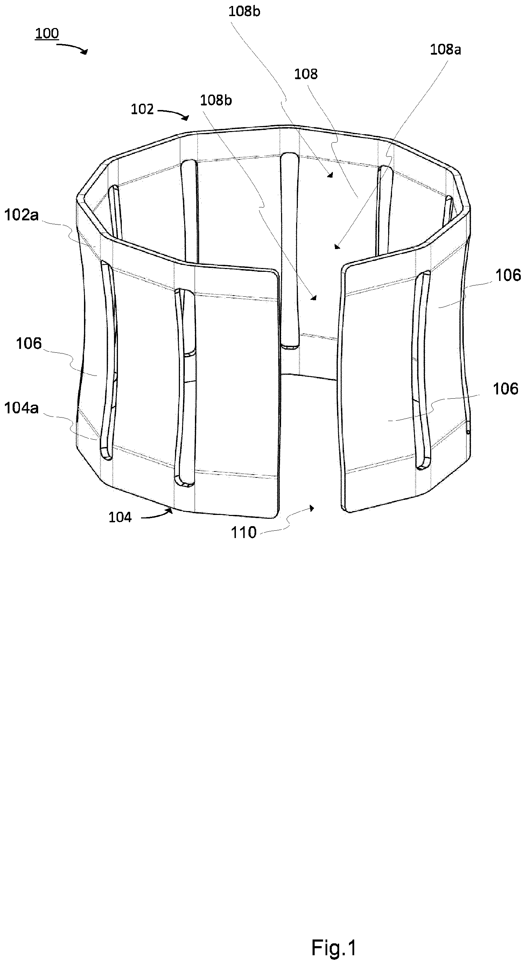

Figure 1 shows a perspective view of the spring device 100 according to an embodiment of the present disclosure.

The first aspect of this disclosure shows a spring device 100 for securing a threaded fastener of a bolted joint (not shown). The spring device 100 comprises a ring-shaped first end portion 102, a ring-shaped second end portion 104, and a plurality of elongate spring elements 106. Each spring element 106 is attached in a first end 102a to the first end portion 102 and in an opposite second end 104a to the second end portion 104a. The first end portion 102 and the second end portion 104 are in alignment and have a common centre axis. Each spring element 106 comprises an inner peripheral surface 108 directed towards the centre axis, and wherein a first portion 108a of the inner peripheral surface 108 is closer to the centre axis than the other portions 108b of the inner peripheral surface 108. The first portion 108a of the inner peripheral surface 108 is also closer to the centre axis than the inner peripheral surface of the first end portion 102 as well as the inner peripheral surface of the second end portion 104.

The first portion 108a of the inner peripheral surface of the spring element 106 is a central portion of the spring element 106 in the direction of the centre axis, and wherein said other portions are a respective neighboring portions on each opposite side of the first portion 108a, wherein said other portions extend from the first portion 108a to the ring-shaped first portion 102 and the ring-shaped second portion 104 respectively.

Each of the ring-shaped first portion 102 and the ring shaped second portion 104 comprises a slit 110 extending though said portion. The slit enables the spring device 100 to be temporarily compressed to a smaller diameter.

The spring device 100 comprises a first material defining a core of each spring element 106 and a layer of a second material applied on said first portion 108a of the inner peripheral surface of the spring element 106, wherein the first material has a higher spring constant than the second material and the second material has a higher friction coefficient than the first material.

An outer radius of the ring-shaped first portion 102 and an outer radius of the ring-shaped second portion 104 are equal and define the maximum outer radius of the spring device 100.

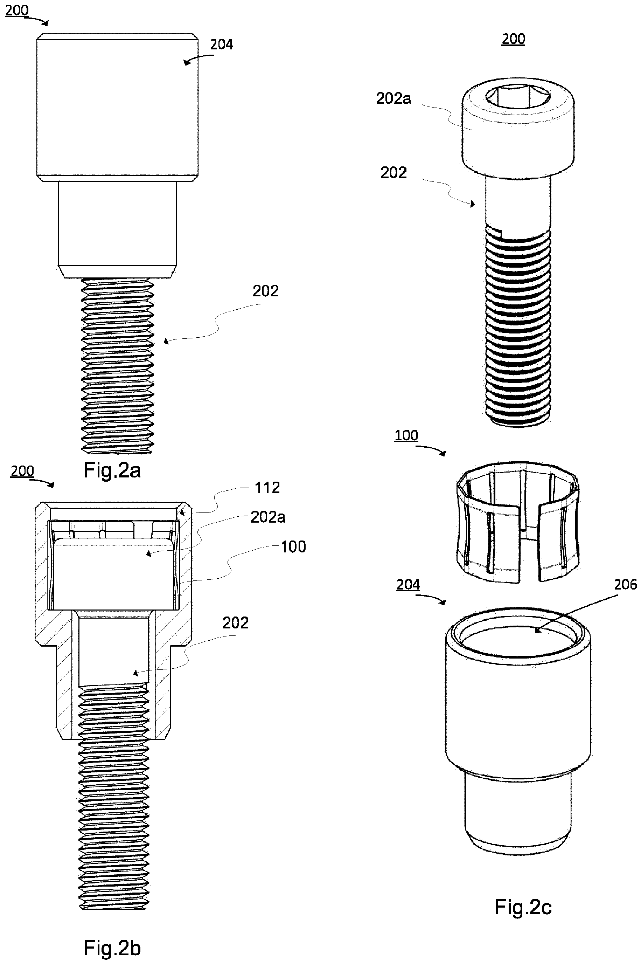

Figures 2a-2b show perspective views of the system 200 for securing a bolted joint according to an embodiment of the present disclosure.

Figure 2a shows a perspective view of the system 200 for securing a bolted joint according to an embodiment of the present disclosure.

Figure 2b shows a perspective cross-sectional of the same system 200 as shown in Fig.2a.

The second aspect of this disclosure shows a system 200 for securing a bolted joint. The system 200 comprises a spring device 100 according to the first aspect, a threaded fastener 202, and a fastener arrangement 204 comprising a hole 206 (shown in Fig. 2c) arranged to receive the spring device 100 and a head 202a of the threaded fastener 202. The head 202a of the threaded fastener 202 has a radius which is larger than the distance from the first portion 108a of the inner peripheral surface 108 of each spring element 106 to the centre axis of the spring device 100. An outer radius of the at least one ring-shaped portion 102, 104 of the spring device 100 corresponds to an inner radius of the hole 206 and a centre axis of the hole 106 is in alignment with the centre axis of the spring device 100 when the spring device 100 is received in the hole.

The fastener arrangement 204 comprises a sleeve defining said hole 206.

The at least one ring-shaped portion 102, 104 of the spring device 100 comprises a slit 110 extending through it, and the fastener arrangement comprises a projection 112 at an inlet to said hole, said projection 112 having a distance to the centre axis of the hole which is less than the outer radius of the at least one ring-shaped portion 102, 104 of the spring device 100 when the latter is in a non-compressed state in which the slit 110 is open. The distance is larger than the outer radius of the at least one ring-shaped portion 102, 104 of the spring device 100 when the latter is in a compressed state in which the slit 110 is closed.

## Claims

1. A system (200) for securing a bolted joint, wherein the system (200) comprises a spring device (100) for securing a threaded fastener of a bolted joint, wherein said spring device (100) comprises at least one ring-shaped portion (102, 104), and a plurality of elongate spring elements (106), wherein each spring element (106) is attached at least in a first end to the at least one ring-shaped portion (102, 104), wherein the at least one ring-shaped portion (102, 104) and a body formed by the plurality of spring elements have a common centre axis, wherein each spring element (106) comprises an inner peripheral surface (108) directed towards the centre axis, and wherein a first portion (108a) of said inner peripheral surface (108) is closer to the centre axis than are other portions (108b) of said inner peripheral surface (108) and closer to the centre axis than an inner peripheral surface (102a) of the at least one ring-shaped portion (102, 104), a threaded fastener (202), and a fastener arrangement (204) comprising a hole (206) arranged to receive the spring device (100) and a head (202a) of the threaded fastener (202), wherein the head (202a) of the threaded fastener (202) has a radius which, in an unloaded state of the spring device, is larger than the distance from the first portion (108a) of the inner peripheral surface (108) of each spring element (106) to the centre axis of the spring device (100) and an outer radius of the at least one ring-shaped portion (102) of the spring device (100) corresponds to an inner radius of said hole (206) and a centre axis of said hole (106) is in alignment with the centre axis of the spring device (100) when the spring device (100) is received in the hole, and wherein the spring device (100) encloses the head (202a) of the threaded fastener (202), wherein the inner peripheral surface (108) of each spring element (106) exerts a friction force against the head (202a) of the threaded fastener (202) to keep the head (202a) of the threaded fastener (200) from rotating relative the spring device (100) and the fastener arrangement (204).

2. The system (200) according to claim 1, wherein the at least one ring-shaped portion comprises a ring-shaped first portion (102) and a ring-shaped second portion (104) which is in alignment with the ring-shaped first portion (102) and wherein the ring-shaped first portion (102) and the ring-shaped second portion (104) have a common centre axis, and wherein each of the spring elements (106) is connected in a first end to the ring-shaped first portion (102) and in an opposite second end to the ring-shaped second portion (104).

3. The system (200) according to claim 2, wherein the ring-shaped first portion (102) forms a first end portion (102) of the spring device, and the ring-shaped second portion (104) forms a second end portion (104) of the spring device (100).

4. The system (200) according to claim 2 or 3, wherein said first portion (108a) of the inner peripheral surface of the spring element (106) is a central portion of the spring element (106) in the direction of the centre axis, and wherein said other portions are a respective neighboring portions on each opposite side of the first portion (108a), wherein said other portions extend from the first portion (108a) to the ring-shaped first portion (102) and the ring-shaped second portion (104) respectively.

5. The system (200) according to any one of claims 1-4, wherein the at least one ring-shaped portion (102) comprises a slit (110) extending through said portion.

6. The system (200) according to any one of claims 2-5, wherein each of the ring-shaped first portion (102) and the ring shaped second portion (104) comprises a slit (110) extending though said portion.

7. The system (200)) according to any one of the preceding claims, wherein each spring element (106) is able to deform elastically from an unloaded state in which said first portion (108a) of the inner peripheral surface (108) is closer to the centre axis than are the other portions (108b) of the inner peripheral surface (108) to a deformed state in which said first portion (108a) of the inner peripheral surface (108) is in alignment with said the other portions (108b) of the inner peripheral surface (108).

8. The system (200)) according to any one of the preceding claims, wherein the spring device (100) comprises a first material defining a core of each spring element (106) and a layer of a second material applied on said first portion (108a) of the inner peripheral surface of the spring element (106), wherein the first material has a higher spring constant than the second material and the second material has a higher friction coefficient than the first material.

9. The system (200)) according to any one of the preceding claims, wherein an outer radius of the at least one ring-shaped portion (102, 104) defines the maximum outer radius of the spring device (100).

10. The system (200) according to any one of claims 2-9, wherein an outer radius of the ring-shaped first portion (102) and an outer radius of the ring-shaped second portion (104) are equal and define the maximum outer radius of the spring device (100).

11. The system according to any one of claims 1-10, wherein the fastener arrangement (204) comprises a sleeve defining said hole (206).

12. The system according to any one of claims 1-11, wherein the at least one ring-shaped portion (102, 104) of the spring device (100) comprises a slit (110) extending through it, and the fastener arrangement comprises a projection (112) at an inlet to said hole, said projection (112) having a distance to the centre axis of the hole which is less than the outer radius of the at least one ring-shaped portion (102, 104) of the spring device (100) when the latter is in a non-compressed state in which the slit (110) is open, and which distance is larger than the outer radius of the at least one ring-shaped portion (102, 104) of the spring device (100) when the latter is in a compressed state in which the slit (110) is closed.

## Patentansprüche

1. System (200) zum Sichern einer Schraubverbindung, wobei das System (200) eine Federvorrichtung (100) zum Sichern eines Befestigungselements mit Gewinde einer Schraubverbindung umfasst, wobei die Federvorrichtung (100) mindestens einen ringförmigen Abschnitt (102, 104) und eine Vielzahl von länglichen Federelementen (106) umfasst, wobei jedes Federelement (106) mindestens an einem ersten Ende an dem mindestens einen ringförmigen Abschnitt (102, 104) befestigt ist, wobei der mindestens eine ringförmige Abschnitt (102, 104) und ein durch die Vielzahl von Federelementen gebildeter Körper eine gemeinsame Mittelachse aufweisen, wobei jedes Federelement (106) eine innere Umfangsfläche (108) umfasst, die in Richtung der Mittelachse gerichtet ist, und wobei ein erster Abschnitt (108a) der inneren Umfangsfläche (108) näher an der Mittelachse liegt als andere Abschnitte (108b) der inneren Umfangsfläche (108) und näher an der Mittelachse als eine innere Umfangsfläche (102a) des mindestens einen ringförmigen Abschnitts (102, 104), ein Befestigungselement mit Gewinde (202) und eine Befestigungselementanordnung (204), umfassend ein Loch (206), das dazu angeordnet ist, die Federvorrichtung (100) und einen Kopf (202a) des Befestigungselements mit Gewinde (202) aufzunehmen, wobei der Kopf (202a) des Befestigungselements mit Gewinde (202) einen Radius aufweist, der, in einem unbelasteten Zustand der Federvorrichtung, größer als der Abstand von dem ersten Abschnitt (108a) der inneren Umfangsfläche (108) jedes Federelements (106) zu der Mittelachse der Federvorrichtung (100) ist, und ein äußerer Radius des mindestens einen ringförmigen Abschnitts (102) der Federvorrichtung (100) einem inneren Radius des Lochs (206) entspricht und eine Mittelachse des Lochs (106) mit der Mittelachse der Federvorrichtung (100) ausgerichtet ist, wenn die Federvorrichtung (100) in dem Loch aufgenommen ist, und wobei die Federvorrichtung (100) den Kopf (202a) des Befestigungselements mit Gewinde (202) umschließt, wobei die innere Umfangsfläche (108) jedes Federelements (106) eine Reibungskraft gegen den Kopf (202a) des Befestigungselements mit Gewinde (202) ausübt, um den Kopf (202a) des Befestigungselements mit Gewinde (202) davon abzuhalten, sich relativ zu der Federvorrichtung (100) und der Befestigungsanordnung (204) zu drehen.

2. System (200) nach Anspruch 1, wobei der mindestens eine ringförmige Abschnitt einen ringförmigen ersten Abschnitt (102) und einen ringförmigen zweiten Abschnitt (104), der mit dem ringförmigen ersten Abschnitt (102) ausgerichtet ist, umfasst und wobei der ringförmige erste Abschnitt (102) und der ringförmige zweite Abschnitt (104) eine gemeinsame Mittelachse aufweisen und wobei jedes der Federelemente (106) an einem ersten Ende mit dem ringförmigen ersten Abschnitt (102) und an einem gegenüberliegenden zweiten Ende mit dem ringförmigen zweiten Abschnitt (104) verbunden ist.

3. System (200) nach Anspruch 2, wobei der ringförmige erste Abschnitt (102) einen ersten Endabschnitt (102) der Federvorrichtung bildet und der ringförmige zweite Abschnitt (104) einen zweiten Endabschnitt (104) der Federvorrichtung (100) bildet.

4. System (200) nach Anspruch 2 oder 3, wobei der erste Abschnitt (108a) der inneren Umfangsfläche des Federelements (106) ein mittlerer Abschnitt des Federelements (106) in der Richtung der Mittelachse ist, und wobei die anderen Abschnitte jeweils benachbarte Abschnitte auf jeder gegenüberliegenden Seite des ersten Abschnitts (108a) sind, wobei sich die anderen Abschnitte von dem ersten Abschnitt (108a) zu dem ringförmigen ersten Abschnitt (102) bzw. zu dem ringförmigen zweiten Abschnitt (104) erstrecken.

5. System (200) nach einem der Ansprüche 1-4, wobei der mindestens eine ringförmige Abschnitt (102) einen Schlitz (110), der sich durch den Abschnitt erstreckt, umfasst.

6. System (200) nach einem der Ansprüche 2-5, wobei jeder des ringförmigen ersten Abschnitts (102) und des ringförmigen zweiten Abschnitts (104) einen Schlitz (110), der sich durch den Abschnitt erstreckt, umfasst.

7. System (200) nach einem der vorhergehenden Ansprüche, wobei jedes Federelement (106) in der Lage ist, sich elastisch von einem unbelasteten Zustand, in dem der erste Abschnitt (108a) der inneren Umfangsfläche (108) näher an der Mittelachse liegt als die anderen Abschnitte (108b) der inneren Umfangsfläche (108), in einen verformten Zustand zu verformen, in dem der erste Abschnitt (108a) der inneren Umfangsfläche (108) mit den anderen Abschnitten (108b) der inneren Umfangsfläche (108) ausgerichtet ist.

8. System (200) nach einem der vorhergehenden Ansprüche, wobei die Federvorrichtung (100) ein erstes Material, das einen Kern jedes Federelements (106) definiert, und eine Schicht eines zweiten Materials, die auf den ersten Abschnitt (108a) der inneren Umfangsfläche des Federelements (106) aufgebracht ist, umfasst, wobei das erste Material eine höhere Federkonstante als das zweite Material aufweist und das zweite Material einen höheren Reibungskoeffizienten als das erste Material aufweist.

9. System (200) nach einem der vorhergehenden Ansprüche, wobei ein Außenradius des mindestens einen ringförmigen Abschnitts (102, 104) den maximalen Außenradius der Federvorrichtung (100) definiert.

10. System (200) nach einem der Ansprüche 2-9, wobei ein Außenradius des ringförmigen ersten Abschnitts (102) und ein Außenradius des ringförmigen zweiten Abschnitts (104) gleich sind und den maximalen Außenradius der Federvorrichtung (100) definieren.

11. System (200) nach einem der Ansprüche 1-10, wobei die Befestigungsanordnung (204) eine Hülse, die das Loch (206) definiert, umfasst.

12. System (200) nach einem der Ansprüche 1-11, wobei der mindestens eine ringförmige Abschnitt (102, 104) der Federvorrichtung (100) einen Schlitz (110), der sich durch ihn erstreckt, umfasst und die Befestigungsanordnung einen Vorsprung (112) an einem Einlass zu dem Loch umfasst, wobei der Vorsprung (112) einen Abstand zu der Mittelachse des Lochs aufweist, der kleiner ist als der Außenradius des mindestens einen ringförmigen Abschnitts (102, 104) der Federvorrichtung (100), wenn sich die letztere in einem nicht komprimierten Zustand befindet, in dem der Schlitz (110) offen ist, und wobei der Abstand größer als der Außenradius des mindestens einen ringförmigen Abschnitts (102, 104) der Federvorrichtung (100) ist, wenn sich die letztere in einem komprimierten Zustand befindet, in dem der Schlitz (110) geschlossen ist.

## Revendications

1. Système (200) pour fixer un raccord boulonné, dans lequel le système (200) comprend un dispositif à ressort (100) pour fixer un élément de fixation fileté d'un raccord boulonné, dans lequel ledit dispositif à ressort (100) comprend au moins une partie en forme d'anneau (102, 104) et une pluralité d'éléments de ressort allongés (106), dans lequel chaque élément de ressort (106) est fixé au moins dans une première extrémité à l'au moins une partie en forme d'anneau (102, 104), dans lequel l'au moins une partie en forme d'anneau (102, 104) et un corps formé par la pluralité d'éléments de ressort ont un axe central commun, dans lequel chaque élément de ressort (106) comprend une surface périphérique interne (108) dirigée vers l'axe central, et dans lequel une première partie (108a) de ladite surface périphérique interne (108) est plus proche de l'axe central que d'autres parties (108b) de ladite surface périphérique interne (108) et plus proche de l'axe central qu'une surface périphérique interne (102a) de l'au moins une partie en forme d'anneau (102, 104), un élément de fixation fileté (202) et un agencement d'élément de fixation (204) comprenant un trou (206) agencé pour recevoir le dispositif à ressort (100) et une tête (202a) de l'élément de fixation fileté (202), dans lequel la tête (202a) de l'élément de fixation fileté (202) a un rayon qui, dans un état non chargé du dispositif à ressort, est plus grand que la distance entre la première partie (108a) de la surface périphérique interne (108) de chaque élément de ressort (106) et l'axe central du dispositif à ressort (100) et un rayon externe de l'au moins une partie en forme d'anneau (102) du dispositif à ressort (100) correspond à un rayon interne dudit trou (206) et un axe central dudit trou (106) est aligné avec l'axe central du dispositif à ressort (100) lorsque le dispositif à ressort (100) est reçu dans le trou, et dans lequel le dispositif à ressort (100) entoure la tête (202a) de l'élément de fixation fileté (202), dans lequel la surface périphérique interne (108) de chaque élément de ressort (106) exerce une force de frottement contre la tête (202a) de l'élément de fixation fileté (202) pour empêcher la tête (202a) de l'élément de fixation fileté (202) de tourner par rapport au dispositif à ressort (100) et à l'agencement d'élément de fixation (204).

2. Système (200) selon la revendication 1, dans lequel l'au moins une partie en forme d'anneau comprend une première partie en forme d'anneau (102) et une seconde partie en forme d'anneau (104) qui est alignée avec la première partie en forme d'anneau (102) et dans lequel la première partie en forme d'anneau (102) et la seconde partie en forme d'anneau (104) ont un axe central commun, et dans lequel chacun des éléments de ressort (106) est connecté dans une première extrémité à la première partie en forme d'anneau (102) et dans une seconde extrémité opposée à la seconde partie en forme d'anneau (104).

3. Système (200) selon la revendication 2, dans lequel la première partie en forme d'anneau (102) forme une première partie d'extrémité (102) du dispositif à ressort, et la seconde partie en forme d'anneau (104) forme une seconde partie d'extrémité (104) du dispositif à ressort (100).

4. Système (200) selon la revendication 2 ou 3, dans lequel ladite première partie (108a) de la surface périphérique interne de l'élément de ressort (106) est une partie centrale de l'élément de ressort (106) dans la direction de l'axe central, et dans lequel lesdites autres parties sont des parties voisines respectives sur chaque côté opposé de la première partie (108a), dans lequel lesdites autres parties se prolongent de la première partie (108a) à la première partie en forme d'anneau (102) et à la seconde partie en forme d'anneau (104) respectivement.

5. Système (200) selon l'une quelconque des revendications 1 à 4, dans lequel l'au moins une partie en forme d'anneau (102) comprend une fente (110) se prolongeant à travers ladite partie.

6. Système (200) selon l'une quelconque des revendications 2 à 5, dans lequel chacune de la première partie en forme d'anneau (102) et de la seconde partie en forme d'anneau (104) comprend une fente (110) se prolongeant à travers ladite partie.

7. Système (200) selon l'une quelconque des revendications précédentes, dans lequel chaque élément de ressort (106) est capable de se déformer élastiquement depuis un état non chargé dans lequel ladite première partie (108a) de la surface périphérique interne (108) est plus proche de l'axe central que les autres parties (108b) de la surface périphérique interne (108) jusqu'à un état déformé dans lequel ladite première partie (108a) de la surface périphérique interne (108) est alignée avec lesdites autres parties (108b) de la surface périphérique interne (108).

8. Système (200) selon l'une quelconque des revendications précédentes, dans lequel le dispositif à ressort (100) comprend un premier matériau définissant un noyau de chaque élément de ressort (106) et une couche d'un second matériau appliquée sur ladite première partie (108a) de la surface périphérique interne de l'élément de ressort (106), dans lequel le premier matériau a une constante de ressort plus élevée que le second matériau et le second matériau a un coefficient de frottement plus élevé que le premier matériau.

9. Système (200) selon l'une quelconque des revendications précédentes, dans lequel un rayon externe de l'au moins une partie en forme d'anneau (102, 104) définit le rayon externe maximal du dispositif à ressort (100).

10. Système (200) selon l'une quelconque des revendications 2 à 9, dans lequel un rayon externe de la première partie en forme d'anneau (102) et un rayon externe de la seconde partie en forme d'anneau (104) sont égaux et définissent le rayon externe maximal du dispositif à ressort (100).

11. Système selon l'une quelconque des revendications 1 à 10, dans lequel l'agencement d'élément de fixation (204) comprend un manchon définissant ledit trou (206).

12. Système selon l'une quelconque des revendications 1 à 11, dans lequel l'au moins une partie en forme d'anneau (102, 104) du dispositif à ressort (100) comprend une fente (110) se prolongeant à travers elle, et l'agencement d'élément de fixation comprend une saillie (112) au niveau d'une entrée dudit trou, ladite saillie (112) ayant une distance par rapport à l'axe central du trou qui est inférieure au rayon externe de l'au moins une partie en forme d'anneau (102, 104) du dispositif à ressort (100) lorsque ce dernier est dans un état non comprimé dans lequel la fente (110) est ouverte, et laquelle distance est supérieure au rayon externe de l'au moins une partie en forme d'anneau (102, 104) du dispositif à ressort (100) lorsque ce dernier est dans un état comprimé dans lequel la fente (110) est fermée.
